# EUROPEAN PATENT APPLICATION

(11) **EP 2 383 823 A1**
(43) Date of publication of application: **02.11.2011**
(21) Application number: 10165204.8
(22) Date of filing: 08.06.2010
(51) Int. Cl.: H01M 8/00, H01M 8/04

(54) **System for recycling thermal energy generated from a fuel cell module**

(30) Priority: 28.04.2010 TW 099113575
(71) Applicant: Chung-Hsin Electric and Machinery Manufacturing Corp., Taipei County (TW)
(72) Inventor: Chen, Zong-Ji, 33383, Kwei Shan Township (TW); Li, Ting-Kuan, 33383, Kwei Shan Township (TW); Chen, Yu-Jen, 33383, Kwei Shan Township (TW); Lin, Zhan-Yi, 33383, Kwei Shan Township (TW); Wu, Chi-Bin, 33383, Kwei Shan Township (TW)
(74) Representative: Viering, Jentschura & Partner

(57) **Abstract**

The present invention discloses a system for recycling thermal energy generated from a fuel cell module (10). The system includes the fuel cell module (10), a thermal module (20), a heat-recycle module (30) and a control module (40). The thermal module (20) includes a heat transfer apparatus (215). In addition, the thermal module (20) connects with the fuel cell module (10), and the heat-recycle module (30) connects with the heat transfer apparatus (215). The control module (40) detects a starting signal of the fuel cell module (10) and controls the thermal module (20) and the heat-recycle module (30). Thereby, the thermal energy generated from the fuel cell module (10) is transferred to the heat-recycle module (30).

## Description

### Field of the Invention

The present invention relates to thermal recycling technologies, and, relates more particularly to a system for recycling thermal energy generated from a fuel cell module.

### Background of the Invention

In view of the limitation of traditional energy resources, all the governments are preparing for the coming era of hydrogen energy. As an application of hydrogen energy, fuel cells have recently drawn much attention as an emerging energy technology with advantageous of cleanness, high efficiency, and wide adaptability to vehicles, distributed power generation, consumer electronic products and so on. In a fuel cell, a certain catalyst is employed to prompt the reaction between fuel and oxygen so as to generate electric power and H₂O. As it requires no turbine or other power generating devices, and it needs not to heat water to stream that later turns back to water after emitting heat, excellent efficiency of energy conversion can be achieved. Besides, fuel cells have carbon emission lower than that of other power generating apparatuses while the reaction product, water, is harmless, thus being regarded as a low-pollution energy source.

However, when generating power, fuel cells also produce heat. For removing such heat for protecting the fuel cells and stabilizing the chemical reaction thereof, a thermal module is recognized as an important element. In view of the increasingly worrisome global warming and weather anomaly, how to effectively use energy without bring about pollution to the environment would be an issue to be taken seriously by the entire world.

Currently, heat dissipation is achieved by a conductor, e.g. water, which carries thermal energy out of fuel cells so as to allow the thermal energy to be distributed in the air directly. However, this traditional approach is somehow blamable because the thermal energy is totally wasted and becomes a reason of the increasing environmental temperature. In addition, in case of incomplete or poor heat dissipation, the thermal energy accumulated in the fuel cells can affect electric energy conversion and in turn lead to unstable output voltage.

### Summary of the Invention

The present invention is a system for recycling thermal energy generated from a fuel cell module, and serves to recycle the thermal energy generated by the fuel cell module for reuse while optimizing heat dissipation efficiency, monitoring temperatures and ensuring heat transfer efficiency, so as to allow the fuel cell module to perform electric-chemical reaction under the most suitable temperature, and thereby achieve the optimal efficiency of electrical energy conversion.

To achieve the above effects, the present invention provides a system for recycling thermal energy generated from a fuel cell module. The system comprises: a fuel cell module composed of at least one fuel cell; a thermal module having: a first heat transfer duct being connected between a first output end and a first input end of a water channel of the fuel cell module, wherein there are a cooling motor, a first flow sensor, a first three-way valve, a second flow sensor, a first side of a heat transfer apparatus and a first temperature sensor connected in series along a flow direction of the first heat transfer duct; and a thermal reflux duct being routed from one end of the first three-way valve to the first heat transfer duct between the cooling motor and the first output end; a heat-recycle module having: an insulation device including a chamber that has a second output end, a second input end and a plurality of openings; and a second temperature sensor coupled to the insulation device for sensing a water temperature in the chamber; a second heat transfer duct being connected between the second output end and the second input end, wherein there are a heat-recycle motor, a third flow sensor, a second three-way valve and a second side of the heat transfer apparatus connected in series along a flow direction of the second heat transfer duct; and a heat-storage reflux duct being routed from one end of the second three-way valve to the second heat transfer duct between the heat transfer apparatus and the second input end; and a control module being configured to perform steps of: detecting a starting signal of the fuel cell module; starting the thermal module; starting the heat-recycle module; and starting a heat transfer process that makes the water in the first heat transfer duct and the water in the second heat transfer duct perform heat exchange in the heat transfer apparatus; wherein, during the heat transfer process, there is no transfer of substance between the water in the fuel cell module and the water in the insulation device.

By implementing the present embodiment, at least the following progressive effects can be achieved:
1. Recycling and reusing the thermal energy generated by the fuel cell module to, for example, a heater;
2. Improving efficiency of heat dissipation; and
3. Allowing the fuel cell module to perform electric-chemical reaction under the most suitable temperature, thereby ensuring optimal electric energy conversion.

### Brief Description of the Drawings

The invention as well as a preferred mode of use, further objectives and advantages thereof will be best understood by reference to the following detailed description of illustrative embodiments when acquire in conjunction with the accompanying drawings, wherein:
Fig. 1 is a schematic diagram of a system for recycling thermal energy generated from a fuel cell module according to the present invention;
Fig. 2 is a flow chart of starting a control module in the system of Fig. 1;
Fig. 3 is a flow chart of operation of a thermal module in the system of Fig. 1;
Fig. 4 is a flow chart of operation of a heat-recycle module in the system of Fig. 1;
   and
Fig. 5 is a flow chart of a heat transfer process of the system of Fig. 1 according to the present invention.

### Detailed Description of the Invention

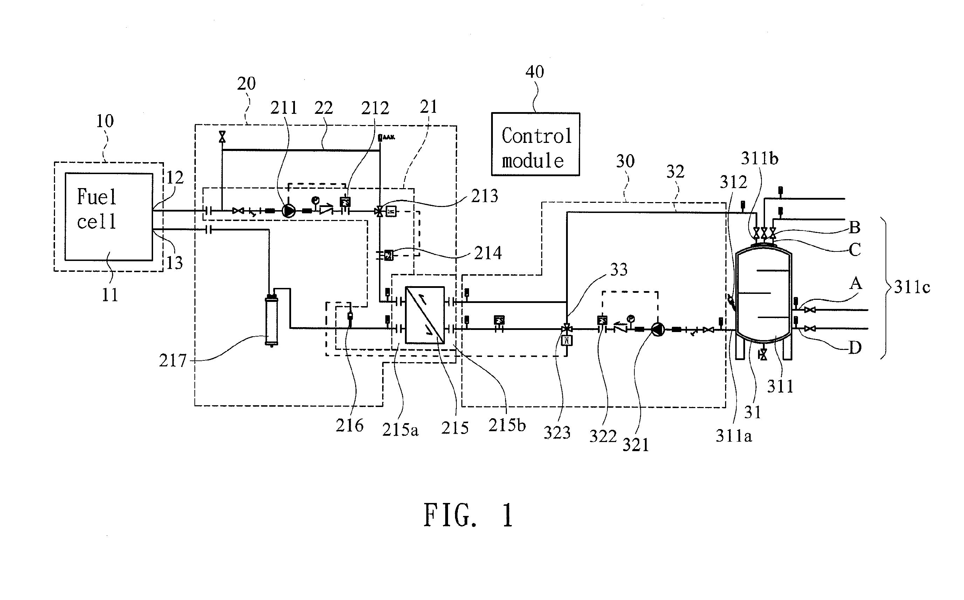

Fig. 1 shows an embodiment of a system for recycling thermal energy generated from a fuel cell module according to the present invention. The system comprises: a fuel cell module 10, a thermal module 20, a heat-recycle module 30 and a control module 40.

The fuel cell module 10 is composed of at lest one fuel cell 11 and configured to generate electric power.

The thermal module 20 has a first heat transfer duct 21 and a thermal reflux duct 22, for facilitating heat dissipation of the fuel cell module 10, so as to prevent heat accumulation in and consequently degraded energy conversion efficiency of the fuel cell module 10.

The said first heat transfer duct 21 is connected between a first output end 12 and a first input end 13 of a water channel in the fuel cell module 10. In the first heat transfer duct 21, there are a cooling motor 211, a first flow sensor 212, a first three-way valve 213, a second flow sensor 214, a first side 215a of a heat transfer apparatus 215 and a first temperature sensor 216 connected in series along the flow direction, for performing heat dissipation plus temperature monitoring of the water in first heat transfer duct 21 by the first temperature sensor 216.

Therein, the thermal reflux duct 22 is routed from one end of the first three-way valve 213 to the first heat transfer duct 21 between the cooling motor 211 and the first output end 12. Thereby, when the water in the first heat transfer duct 21 is cooler than a preset temperature or than the temperature inside the heat-recycle module 30, the first three-way valve 213 is operated to allow the water in the first heat transfer duct 21 to flow into the thermal reflux duct 22, so as to prevent heat transfer from the heat-recycle module 30 to the first heat transfer duct 21.

The heat-recycle module 30 includes an insulation device 31, a second heat transfer duct 32, and a heat-storage reflux duct 33. In virtue of the heat transfer apparatus 215, thermal energy contained in the thermal module 20 can be transferred to the heat-recycle module 30 for storage and reuse. Therein, the insulation device 31 includes a chamber 311 and a second temperature sensor 312. The said chamber 311 has a second output end 311 a, a second input end 311b and plural openings 311c. The second temperature sensor 312 is coupled to the insulation device 31 for sensing the water temperature in the chamber. The second heat transfer duct 32 is connected between the second output end 311a and the second input end 311b. Additionally, in the second heat transfer duct 32, there are a heat-recycle motor 321, a third flow sensor 322, a second three-way valve 323 and a second side 215b of the heat transfer apparatus 215 connected in series along the flow direction.

The heat-storage reflux duct 33 is routed from one end of the second three-way valve 323 to the second heat transfer duct 32 between the heat transfer apparatus 215 and the second input end 311b. The heat-storage reflux duct 33 serves to, when the heat-recycle module 30 is hotter than the thermal module 20, introduce water from the second heat transfer duct 32 to the heat-storage reflux duct 33 through the second three-way valve 323, so as to prevent heat transfer from the heat-recycle module 30 to the thermal module 20.

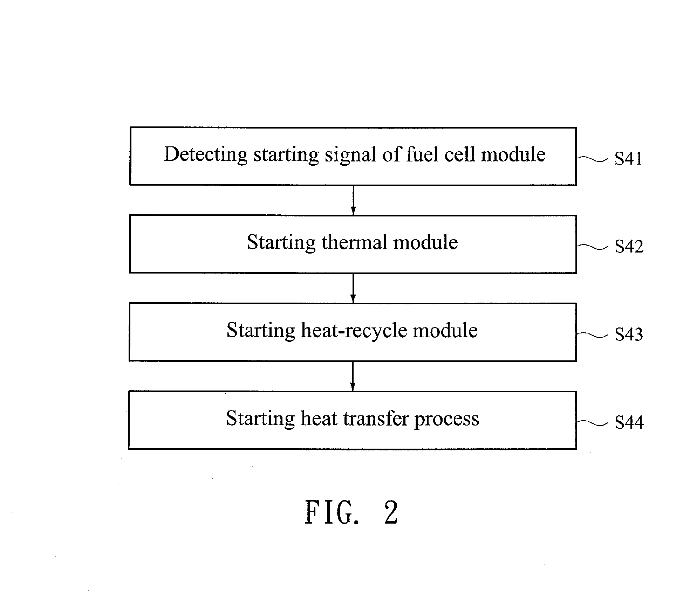

Referring to Fig. 2 also, the control module 40 is configured to perform the following steps: detecting a starting signal of the fuel cell module (S41), starting the thermal module (S42), starting the heat-recycle module (S43), and starting the heat transfer process (S44). This makes the water in the first heat transfer duct 21 and the water in the second heat transfer duct 32 perform a heat transfer process in the heat transfer apparatus 215. Therein, during the heat transfer process, there is no transfer of substance between the water in the fuel cell module 10 and the water in the insulation device 31. Furthermore, the control module 40 serves to, compare detected results of the first temperature sensor 216 and the second temperature sensor 312, and determine whether to start the heat transfer process. By such means, the fuel cell module 10 can be protected from damage caused by hot reflux otherwise happening when the heat-recycle module 30 surpasses the thermal module 20 in thermal energy.

Moreover, the openings 311c of the heat-recycle module 30 may includes a heater water supplying opening A, a heater backwater opening B, a water make-up opening C and a water supply opening D, for the use of back-end equipment. Further, the first heat transfer duct 21 has a deionized water filter 217 connected between the first temperature sensor 216 and the first input end 13, for filtering water entering the first input end 13, so as to block impurities and maintain the fuel cell module 10 intact as well as efficient.

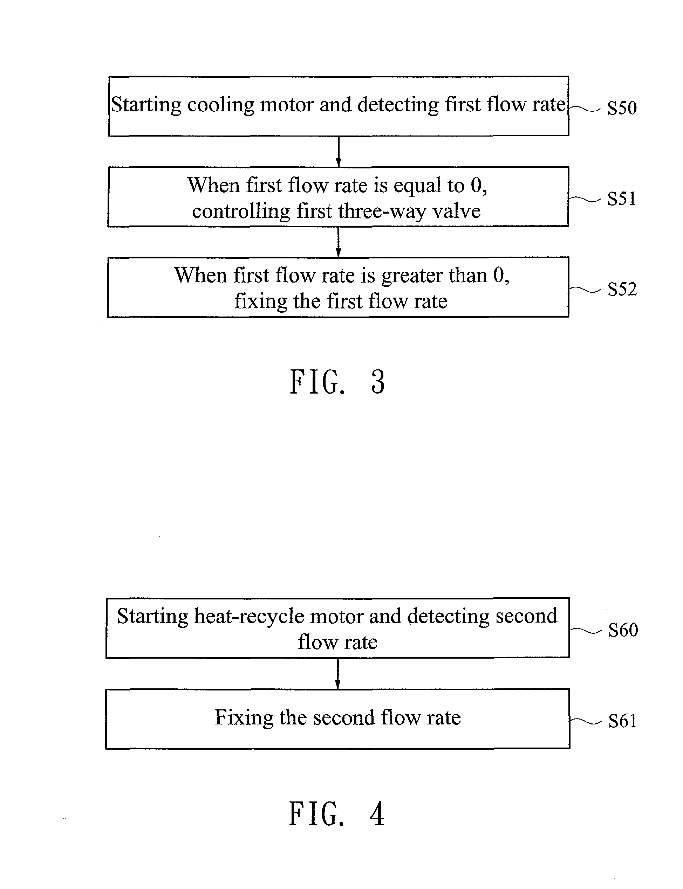

Also seeing Fig. 3, to start the heat transfer process, the following steps are to be performed: starting the cooling motor and detecting a first flow rate (S50); when the first flow rate is equal to 0 lpm, controlling the first three-way valve (S51); and when the first flow rate is greater than 0 lpm, fixing the first flow rate (S52).

In the step of starting the cooling motor and detecting the first flow rate (S50), the cooling motor 211 is started and the first flow rate in the first heat transfer duct 21 is detected by the second flow sensor 214.

In the step of controlling the first three-way valve when the first flow rate is equal to 0 lpm (S51), the first three-way valve 213 is operated to make water flow to the thermal reflux duct 22 when the first flow rate is equal to 0 lpm.

In the step of fixing the first flow rate when the first flow rate is greater than 0 lpm (S52), the first flow rate is fixed by the cooling motor 211 when the first flow rate is greater than 0 lpm.

In addition, when the first flow rate is not equal to a first standard value, the control module 40 further performs a first warning mechanism. Therein, when the heat transfer process is started, the minimal flow rate value required by the first flow rate is the first standard value. By this, an operator is enabled to ensure heat dissipation.

Referring also to Fig. 4, to start the heat-recycle module, the following steps are to be performed: starting the heat-recycle motor and detecting the second flow rate (S60); and fixing the second flow rate (S61). Therein, the heat-recycle motor 321 is started and the second flow rate in the second heat transfer duct 32 is detected by the third flow sensor 322 and fixed by the heat-recycle motor 321. When the second flow rate is not equal to a second standard value, the control module 40 further performs a second warning mechanism. Therein, when the heat transfer process is started, the minimal flow rate value required by the second flow rate is the second standard value. By using this to control thermal accumulation in the heat-recycle module 30, heat transfer to the thermal module 20 can be eliminated.

When the second flow sensor 214 detects that the first flow rate in the first heat transfer duct 21 is not equal to zero and the third flow sensor 322 detects that the second flow rate in the second heat transfer duct 32 is not equal to zero, the temperature readings obtained by the first temperature sensor 216 and the second temperature sensor 312 are read and the heat transfer process is started.

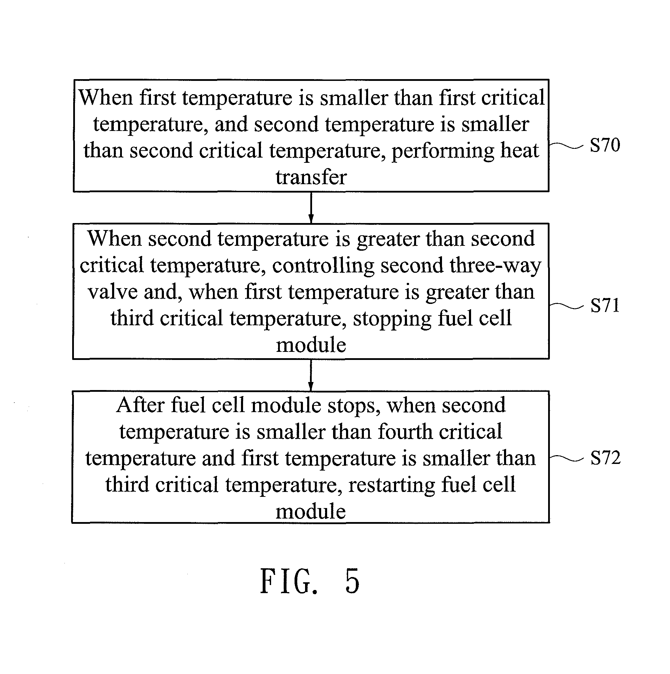

Seeing Fig. 5, the heat transfer process comprises the following steps: when the first temperature is smaller than a first critical temperature, and the second temperature is smaller than a second critical temperature, performing heat transfer (S70); when the second temperature is greater than the second critical temperature, controlling the second three-way valve and, when the first temperature is greater than a third critical temperature, stopping the fuel cell module (S71); and after the fuel cell module stops, when the second temperature is smaller than a fourth critical temperature and the first temperature is smaller than the third critical temperature, restarting the fuel cell module (S72).

Therein, the first temperature is measured by the first temperature sensor 216 and the second temperature is measured by the second temperature sensor 312.

In the step of performing heat transfer when the first temperature is smaller than the first critical temperature, and the second temperature is smaller than the second critical temperature (S70), thermal energy is transferred to the heat-recycle module 30 from the thermal module 20.

The step of controlling the second three-way valve 323 to communicate the second three-way valve 323 and the heat-storage reflux duct 33 when the second temperature is greater than the second critical temperature, and stopping the fuel cell module when the first temperature is greater than the third critical temperature (S71) serves to protect the fuel cell module 10 from damage or degradation in efficiency.

The step of after the fuel cell module stops, when the second temperature is smaller than the fourth critical temperature and the first temperature is smaller than the third critical temperature, restarting the fuel cell module (S72) is to restart the fuel cell module 10 to supply power after the fuel cell module 10 is secured from any risk of damage.

In addition, the control module 40 may further perform the following steps: presetting a time period; and when the first flow rate and the second flow rate are both equal to zero, after the preset time period, if the first flow rate and the second flow rate are still equal to zero, performing a third warning mechanism. This is to prevent any problem from happening to the fuel cell module 10 due to stationary water. Further, when the first temperature is greater than the first critical temperature, the control module may further perform a fourth warning mechanism. Therein, the first critical temperature and the second critical temperature are both the operational temperature measured by the fuel cell module 10 when the heat transfer apparatus 215 reaches the maximum heat transfer efficiency. The third critical temperature is the highest tolerable temperature of the fuel cell module 10 and the fourth critical temperature is the maximum temperature required by starting the heat-recycle module 30.

Since the present embodiment helps to achieve both the optimal heat dissipation and the optimal heat storage, the fuel cell module 10 can operate to the utmost in both power generation and thermal energy usage, thus contributing significantly to environmental protection. By implementing the present embodiment, at least the following progressive effects can be achieved: applying the thermal energy generated by the fuel cell module 10 to, for example, a heater or other devices requiring thermal energy; improving heat dissipation of the fuel cell module 10; and allowing the fuel cell module 10 to perform electric-chemical reaction under the most suitable temperature, thereby ensuring optimal electric energy conversion.

The present invention has been described with reference to the preferred embodiments and it is understood that the embodiments are not intended to limit the scope of the present invention. Moreover, as the contents disclosed herein should be readily understood and can be implemented by a person skilled in the art, all equivalent changes or modifications which do not depart from the concept of the present invention should be encompassed by the appended claims.

## Claims

1. A system for recycling thermal energy generated from a fuel cell module, the system comprising :
the fuel cell module (10) composed of at least one fuel cell (11);
a thermal module (20) having:
a first heat transfer duct (21) being connected between a first output end (12) and a first input end (13) of a water channel of the fuel cell module (10), wherein there are a cooling motor (211), a first flow sensor (212), a first three-way valve (213), a second flow sensor (214), a first side (215a) of a heat transfer apparatus (215) and a first temperature sensor (216) connected in series along a flow direction of the first heat transfer duct (21); and
a thermal reflux duct (22) being routed from one end of the first three-way valve (213) to the first heat transfer duct (21) between the cooling motor (211) and the first output end (12);
a heat-recycle module (30) having:
an insulation device (3 1) including a chamber (311) that has a second output end (311 a), a second input end (311b) and a plurality of openings (311c); and a second temperature sensor (312) coupled to the insulation device (31) for sensing a water temperature in the chamber (311);
a second heat transfer duct (32) being connected between the second output end (311a) and the second input end (311b), wherein there are a heat-recycle motor (321), a third flow sensor (322), a second three-way valve (323) and a second side (215b) of the heat transfer apparatus (215) connected in series along a flow direction of the second heat transfer duct (32); and
a heat-storage reflux duct (33) being routed from one end of the second three-way valve (323) to the second heat transfer duct (32) between the heat transfer apparatus (215) and the second input end (311b); and
a control module (40) being configured to perform steps of:
detecting a starting signal of the fuel cell module (10);
starting the thermal module (20);
starting the heat-recycle module (30); and
starting a heat transfer process that makes the water in the first heat transfer duct (21) and the water in the second heat transfer duct (32) perform heat exchange in the heat transfer apparatus (215);
wherein, during the heat transfer process, there is no transfer of substance between the water in the fuel cell module (10) and the water in the insulation device (31).

2. The system of Claim 1, wherein the openings (311c) include a heater water supplying opening (A), a heater backwater opening (B), a water make-up opening (C) and a water supply opening (D).

3. The system of Claim 1, wherein the first heat transfer duct (21) further has a deionized water filter (217) deposited between the first temperature sensor (216) and the first input end (13).

4. The system of Claim 1, wherein starting the thermal module (20) comprises steps of:
starting the cooling motor (211) and detecting a first flow rate in the first heat transfer duct (21) by the second flow sensor (214);
when the first flow rate is equal to 0, controlling the first three-way valve (213) to communicate the first three-way valve (213) with the thermal reflux duct (22); and
when the first flow rate is greater than 0, fixing the first flow rate by the cooling motor (211).

5. The system of Claim 4, wherein when the first flow rate is not equal to a first standard value, the control module (40) further performs a first warning mechanism, in which the first standard value is a minimal value required by the first flow rate when the heat transfer process is started.

6. The system of Claim 1, wherein starting the heat-recycle module (30) comprises steps of:
starting the heat-recycle motor (321) and detecting a second flow rate in the second heat transfer duct (32) by the third flow sensor (322); and
fixing the second flow rate by the heat-recycle motor (321).

7. The system of Claim 6, wherein when the second flow rate is not equal to a second standard value, the control module (40) further performs a second warning mechanism, in which the second standard value is a minimal value required by the second flow rate when the heat transfer process is started.

8. The system of Claim 1, wherein when the second flow sensor (214) detects that a first flow rate in the first heat transfer duct (21) is not equal to zero and the third flow sensor (322) detects that a second flow rate in the second heat transfer duct (21) is not equal to zero, temperature readings detected by the first temperature sensor (216) and the second temperature sensor (312) are read and the heat transfer process is started, in which the heat transfer process comprises steps of:
when a first temperature detected by the first temperature sensor (216) is smaller than
a first critical temperature, and a second temperature detected by the second temperature sensor (312) is smaller than a second critical temperature, performing heat exchange;
when the second temperature is greater than the second critical temperature, controlling the second three-way valve (323) to communicate the second three-way valve (323) with the heat-storage reflux duct (33), and when the first temperature is greater than a third critical temperature, stopping the fuel cell module (10); and
after the fuel cell module (10) stops, when the second temperature is smaller than a fourth critical temperature, and the first temperature is not greater than the third critical temperature, restarting the fuel cell module (10).

9. The system of Claim 8, wherein the control module (40) is configured to perform steps of:
presetting a time period; and
when the first flow rate and the second flow rate are both equal to zero, after the time period, if the first flow rate and the second flow rate are still equal to zero, performing a third warning mechanism.

10. The system of Claim 8, wherein when the first temperature is greater than the first critical temperature, the control module (40) further performs a fourth warning mechanism.

11. The system of Claim 8, wherein the first critical temperature is an operational temperature of the fuel cell module (10) when the heat transfer apparatus (215) reaches a maximum heat transfer efficiency.

12. The system of Claim 8, wherein the second critical temperature is an operational temperature of the fuel cell module (10) when the heat transfer apparatus (215) reaches a maximum heat transfer efficiency.

13. The system of Claim 8, wherein the third critical temperature is a highest tolerable temperature of the fuel cell module (10).

14. The system of Claim 8, wherein the fourth critical temperature is a highest temperature required by starting the heat-recycle module (30).
